**Europäisches Patentamt**

**European Patent Office**

**Office européen des brevets**

(19)

(11) Veröffentlichungsnummer : **0 517 266 B1**

(12) **EUROPÄISCHE PATENTSCHRIFT**

(45) Veröffentlichungstag der Patentschrift :
**27.12.95 Patentblatt 95/52**

(51) Int. Cl.$^6$ : **H01S 3/08, H01S 3/094, H01S 3/16, H01S 3/10**

(21) Anmeldenummer : **92109578.2**

(22) Anmeldetag : **05.06.92**

(54) **Laser**

(30) Priorität : **07.06.91 DE 4118819**

(43) Veröffentlichungstag der Anmeldung :
**09.12.92 Patentblatt 92/50**

(45) Bekanntmachung des Hinweises auf die
Patenterteilung :
**27.12.95 Patentblatt 95/52**

(84) Benannte Vertragsstaaten :
**AT BE FR GB IT LU NL SE**

(56) Entgegenhaltungen :
**EP-A- 0 306 136
US-A- 3 644 842
US-A- 4 731 787
OPTICS COMMUNICATIONS. Bd. 77, Nr. 2, 15.
Juni 1990, Amsterdam,NL;Seiten 221-225;I.-
SCHÜTZ et al.: "Miniature self-frequency-
doubling CW Nd:YAB laser pumped by a dio-
de-laser"
PATENT ABSTRACTS OF JAPAN, Bd. 13, Nr.
216 (E-760)19. Mai 1989; & JP-A-1028879
IEEE JOURNAL OF QUANTUM ELECTRONICS,
Bd. 12, Nr. 3, März 1976, New York,US;Seiten
189 - 193;Stephen R. CHINN et al.: "Spiking
oscillations in diode-pumped NdP5O14 and
NdAl3(BO3)4 lasers"
OPTICS LETTERS, Bd. 11, Nr. 4, April 1986,
New York,US;Seiten 204 - 206;T. Y.FAN et
al.:"Efficient GaAlAs diode-laser-pumped
operation of Nd:YLF at 1.047 mum with intracavity doubling to 532.6 nm"
PATENT ABSTRACTS OF JAPAN, Bd. 12, Nr.
427 (P-784)11. November 1988; &
JP-A-63159829
IEEE JOURNAL OF QUANTUM ELECTRONICS,
Bd. 28, Nr. 4, April 1992, New York,US;Seiten
1169 - 1171;HAMID HEMMATI:"Diode-pumped
self-frequency-doubled neodymium ytterium
aluminium borate (NYAB) laser"
George C. BALDWIN: "An introduction to Nonlinear Optics", 1974, Plenum Publishing Corporation, New York, USA, Seiten 99 - 104**

(56) Entgegenhaltungen :
**SCHUBERT/WILHELMI: "Einführung in die
nichlineare Optik", Band 1, 1971, Teubner Verlagsgesellschaft, Seiten 127 - 130**

(73) Patentinhaber : **ADLAS GMBH & CO. KG
Seelandstrasse 67
D-23569 Lübeck (DE)**

(72) Erfinder : **Lawrenz-Stolz, Jörg
Gotenweg 37
W-2400 Lübeck (DE)**
Erfinder : **Petersen, Fedder
Witzlebenstrasse 4
W-2400 Lübeck (DE)**
Erfinder : **Wedekind, Dörte
Blücherstrasse 4
W-2400 Lübeck (DE)**

(74) Vertreter : **Klunker . Schmitt-Nilson . Hirsch
Winzererstrasse 106
D-80797 München (DE)**

## Beschreibung

Die Erfindung betrifft einen Laser.

Üblicherweise besitzen Laser einen Resonator, welcher - bei Festkörperlasern - zwischen zwei Spiegeln einen Festkörper enthält, der mit einer Pumplichtquelle gekoppelt ist. Der Festkörper ist z. B. ein nicht linearer Kristall, der als Wirtskristall für ein laseraktives Medium, wie beispielsweise Nd, dient. Typischerweise beträgt beispielsweise die Wellenlänge des Pumplichts ca. 806 nm bei einem Nd-Laser, so daß dementsprechend ein Laserübergang erfolgt und eine Grundwelle von 1064 nm entsteht.

Die Menge der Wellenlängen derzeit verfügbarer Laser ist begrenzt. Um zusätzliche Wellenlängen zur Verfügung zu haben, kann man Maßnahmen zur Frequenzmischung oder Frequenzverdoppelung vorsehen.

Aus OPTICS COMMUNICATIONS, Bd. 77, Nr. 2, 15. Juni 1990, Amsterdam, NL, Seiten 221 - 225; I. Schütz et al "MINIATURE SELF-FREQUENCY-DOUBLING CW Nd:YAB LASER PUMPED BY A DIODE-LASER" ist es z. B. bekannt, bei einem mittels Diodenlaser gepumpten Nd:YAG-Laser eine direkte Frequenzverdopplung zu erreichen. Die Pumpstrahlung wird nahezu vollständig durch den Nd:YAB-Kristall absorbiert. Die Grundwellenlänge des Kristalls beträgt 1064 nm, und die Wellenlänge der zweiten Harmonischen beträgt dementsprechend 532 nm.

Neben diesem Mechanismus der direkten Frequenzverdopplung gibt es noch die Möglichkeit, eine Summenfrequenzbildung dadurch zu erreichen, daß in einen nicht-linearen Kristall Laserstrahlen mit zwei verschiedenen Wellenlängen eingestrahlt werden. In dem Kristall kommt es zu einer Summenfrequenzbildung, wobei die Wellenlänge des gewonnenen Laserlichts dem Reziprokwert der Summe der Reziprokwerte der beiden eingestrahlten Laserwellenlängen entspricht.

Der Erfindung liegt die Aufgabe zugrunde, einen Laser, insbesondere Festkörperlaser, anzugeben, der bislang nicht verfügbare Wellenlängen zu liefern im Stande ist.

Gelöst wird diese Aufgabe erfindungsgemäß durch einen Laser mit den Merkmalen des Anspruchs 1.

Die Anpassung der Wellenlänge des Pumplichts an das laseraktive Medium ist an sich bekannt. Diese Anpassung dient zur Erzielung eines Laserübergangs. Erfindungsgemäß ist aber hierzu vorgesehen, daß nicht die gesamte Energie des Pumplichts absorbiert wird. Statt dessen soll ein Teil für eine Frequenzmischung zur Verfügung stehen.

Für diese Frequenzmischung der Grundwelle des Lasers und des Pumplichts wird eine Phasenanpassung vorgenommen. Ist diese Bedingung für die Frequenzmischung erfüllt, so erhält man Licht mit Mischfrequenzen, welches durch den Auskoppelspiegel ausgekoppelt und als nutzbares Laserlicht verwendet werden kann.

Bei einem NYAB-Kristall des Resonators beträgt die Grundwellenlänge 1064 nm. Wird dann mit einer Laserdiode gepumpt, die Licht mit einer Wellenlänge von 806 nm erzeugt, so erhält man durch Frequenzmischung blaues Laserlicht mit einer Wellenlänge von 459 nm gemäß der Formel

$$1/\lambda_{mix} = 1/\lambda_L + 1/\lambda_P$$

dabei ist

$\lambda_{mix} =$ die Wellenlänge des durch Frequenzmischung erzeugten Laserlichts, welches über den Auskoppelspiegel des Resonotars als nutzbares Licht ausgekoppelt wird,

$\lambda_L =$ die Grundwelle des Lasers und

$\lambda_P =$ die Wellenlänge des Pumplichts.

Wie oben erläutert, darf das Pumplicht nicht vollständig absorbiert werden, sondern ein Teil der Pumplichtenergie muß für die Frequenzmischung zur Verfügung stehen. Demgemäß wird die sogenannte Absorptionslänge des Kristalls entsprechend gewählt. Die Absporptionslänge hängt ab von der geometrischen Länge des Kristalls selbst, der Konzentration des laseraktiven Mediums, z. B. Nd, der Polarisation und der Wellenlänge des Pumplichts.

Die Phasenanpassung erreicht man z. B. durch geeignete Einstellung der Neigung der Kristallachsen des Kristalls bezüglich der optischen Achse des Lasers. Alternativ oder zusätzlich dazu läßt sich auch die Temperatur des Kristalls beeinflussen, um die gewünschte Phasenanpassung zu erzielen.

Die geeignete Polarisation erzielt man entweder durch einen speziellen Polarisator oder durch entsprechende Ausgestaltung der Pumplichtquelle, bei der es sich vorzugsweise um eine Laserdiode handelt. Das von der Laserdiode abgegebene Licht wird dann auf die gewünschte Polarisation eingestellt.

Bei dem Kristall handelt es sich vorzugsweise um einen doppelbrechenden, nichtlinearen Kristall, insbesondere $YAL_3(BO_3)_4$ oder $LiNbO_3$, während als laseraktives Medium beispielsweise Nd, Er, Ho oder Tm gewählt wird.

Das Laserlicht muß in dem Resonator einige Male hin- und herlaufen. Demgemäß sind beide Spiegel für die Grundwelle des Lasers hochreflektierend ausgebildet. Von den beiden Spiegeln ist der eine Spiegel als Einkoppelspiegel für das Pumplicht ausgebildet, ist also i.a. für die Wellenlänge des Pumplichts transmittierend. Der andere Spiegel ist als Auskoppelspiegel ausgebildet und ist dementsprechend transmittierend für die Mischfrequenz.

Der erfindungsgemäße Laser läßt sich besonders günstig als durchstimmbarer Laser ausbilden. Dazu sieht die Erfindung vor, daß die Pumplichtquelle mindestens eine Laserdiode mit veränderlicher Frequenz aufweist. Hierzu wird beispielsweise die Temperatur der Laserdiode verändert, damit sich die Ausgangsfrequenz der Laserdiode abhängig von der Temperatur ändert. Außerdem kann z.B. über Polarisationseinkopplung das Licht zweier Laserdioden in den Kristall eingekoppelt werden, wobei die Frequenz der ersten Laserdiode fest und die Frequenz der zweiten Laserdiode variabel ist. Das Licht beider Laserdioden wird im Kristall abgebildet. Die Abstimmung der Mischfrequenz erfolgt dann durch die Laserdiode mit der veränderlichen Frequenz bzw. Wellenlänge. Die Phasenanpassung erfolgt dann - wie oben erläutert - durch Drehung des Kristalls, um eine bestimmte Neigung der Kristallachsen bezüglich der optischen Achse des Laser zu erhalten, oder durch geeignete Temperierung des Kristalls.

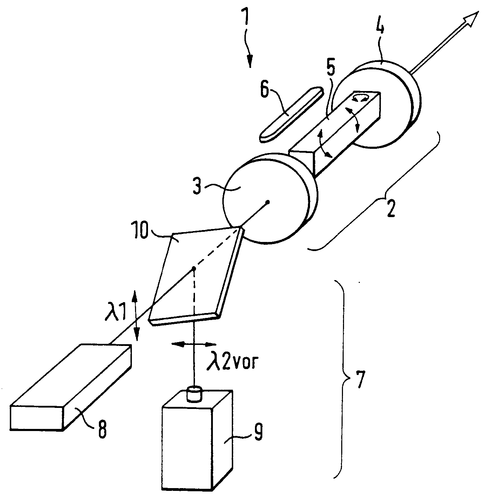

Im folgenden wird ein Ausführungsbeispiel der Erfindung anhand der einzigen Figur näher erläutert.

Gemäß Zeichnung besitzt ein durchstimmbarer Laser einen Resonator 2 und eine Pumplichtquelle 7.

Der Resonator 2 enthält einen Einkoppelspiegel 3, einen Auskoppelspiegel 4 und einen zwischen den Spiegeln 3 und 4 angeordneten, doppelbrechenden, nichtlinearen Kristall 5. Der Kristall ist ein sogenannter NYAB-Kristall, dessen Grundwelle ca. 1064 nm beträgt. Wie durch Doppelpfeile angedeutet, ist der Kristall 5 durch eine geeignete (nicht gezeigte) Lagerung um sämtliche Achsen verstellbar, um praktisch jede beliebige Neigung der Kristallachsen bezüglich der optischen Achse des Lasers einstellen zu können.

Dem Resonator 2 zugeordnet ist eine Heizvorrichtung 6, die hier als stabförmige Heizung angedeutet ist. Sie dient dazu, die Temperatur des Kristalls 5 einzustellen.

Die Pumplichtquelle 7 enthält eine erste Laserdiode 8, die Laserlicht mit einer Wellenlänge $\lambda 1$ von beispielsweise 806 nm abgibt. Außerdem enthält die Pumplichtquelle eine Laserdiode 9, die Licht mit einer Wellenlänge $\lambda_2$ abgibt. Durch eine nicht dargestellte Temperatursteuerung der Laserdiode 9 ist die Wellenlänge $\lambda 2$ variabel.

Das Licht mit der Wellenlänge $\lambda 1$ geht ungehindert durch den Polarisationskoppler 10, das Licht mit der Wellenlänge $\lambda 2$ wird an der von der Zeichnungsebene wegweisenden Seite des Polarisationoskopplers 10 reflektiert. Somit gelangen beide Lichtstrahlen von den Laserdioden 8 und 9 durch den Einkoppelspiegel 3 hindurch in den Kristall 5. Die Abstimmung erfolgt durch Ändern der Wellenlänge $\lambda 2$. Um eine Frequenzmischung in dem Laser zu erreichen, erfolgt eine Phasenanpassung in dem Kristall dadurch, daß die Neigung des Kristalls 5 auf einen geeigneten Wert eingestellt wird und/oder der Kristall 5 durch die Heizvorrichtung 6 auf eine geeignete Temperatur eingestellt wird.

Auf den dem Kristall 5 zugewandten Seiten sind die beiden Spiegel 3 und 4 für die Grundwelle des Kristalls 5 hochreflektierend. Der Einkoppelspiegel 3 ist durchlässig für das Pumplicht. Um höhere Intensitäten des Pumplichts im Resonator zu erhalten, können beide Spiegel auch hochreflektierend für das Pumplicht ausgebildet werden. Der Resonator ist dann ein Fabry-Perot-Interferometer für die Wellenlänge der Laserdiode. Diese Wellenlänge muß genau auf das Fabry-Perot des Interferometers abgestimmt werden. Der Auskoppelspiegel 4 ist durchlässig für die Mischfrequenz. Die Wellenlänge des durch die Frequenzmischung erhaltenen Laserlichts beträgt bei einer Grundwelle von 1064 nm und einer Wellenlänge von 806 nm des Pumplichts 459 nm. Man erhält also blaues Licht am Ausgang des Auskoppelspiegels 4.

## Patentansprüche

1. Laser, mit einem Resonator (2), der zwischen zwei Spiegeln (3, 4) nur einen Kristall (5) enthält, und mit einer Pumplichtquelle (7), umfassend folgende Merkmale
   - der Kristall (5) ist ein doppelbrechender, nicht linearer Kristall, beispielsweise $YAl_3(Bo_3)_4$ oder $LiNbo_3$, der als laseraktives Medium beispielsweise Nd, Er, Ho, Tm enthält,
   - das Pumplicht und das in dem Kristall (5) enthaltene laseraktive Medium sowie die Länge des Kristalls (5) sind derart aufeinander abgestimmt, daß das Pumplicht nahezu, jedoch nicht vollständig absorbiert wird, und
   - es sind Mittel (6) für die Phasenanpassung zur Frequenzmischung der Grundwelle des Lasers und des Pumplichts in dem Kristall vorgesehen.

2. Laser nach Anspruch 1, **dadurch gekennzeichnet**, daß die Mittel für die Phasenanpassung aufweisen:
   - eine Einrichtung zum Verstellen der Lage des Kristalls (5) und/oder
   - eine Temperiereinrichtung (6) für den Kristall (5).

3. Laser nach Anspruch 1 oder 2, **dadurch gekennzeichnet**, daß beide Spiegel für die Grundwelle des Lasers hochreflektierend sind, der eine Spiegel (3) als Einkoppelspiegel für das Pumplicht transmittierend ausgebildet ist und der andere Spiegel als Auskoppelspiegel transmittierend für die Mischfrequenz ist.

4.  Laser nach einem der Ansprüche 1 bis 3, **dadurch gekennzeichnet**, daß die Pumplichtquelle (7) als Laserdiode (8) ausgebildet ist.

5.  Laser nach einem der Ansprüche 1 bis 3, **dadurch gekennzeichnet**, daß die Pumplichtquelle eine erste Laserdiode (8) fester Frequenz und eine zweite Laserdiode (9) veränderlicher Frequenz aufweist, und daß das Licht beider Laserdioden (8, 9) in den Kristall (5) eingekoppelt wird.

6.  Laser nach Anspruch 5, **dadurch gekennzeichnet**, daß das Licht beider Laserdioden (8, 9) über einen Polarisationskoppler (10) und einen Einkoppelspiegel (3) in dem Kristall eingekoppelt wird.

7.  Laser nach Anspruch 1 bis 2, **dadurch gekennzeichnet**, daß beide Spiegel hochreflektierend für die Grundwellenlänge des Lasers und hochreflektierend für das Pumplicht sind, wobei der Auskoppelspiegel für die Mischfrequenz transmittierend ist.

## Claims

1.  A laser having a resonator (2) containing only one crystal (5) between two mirrors (3, 4) and having a pumped light source (7), comprising the following features:
    the crystal (5) is a birefringent, nonlinear crystal, for example $YAl_2(BO_3)_4$ or $LiNbO_3$, which contains as a laser-active medium for example Nd, Er, Ho, Tm,
    the pumped light and the laser-active medium contained in the crystal (5) are coordinated with the length of the crystal (5) in such a way that the pumped light is almost but not completely absorbed, and
    phase matching means (6) are provided for frequency mixture of the fundamental wave of the laser and of the pumped light in the crystal.

2.  The laser of claim 1, characterized in that the phase matching means have:
    means for adjusting the position of the crystal (5) and/or
    tempering means (6) for the crystal (5).

3.  The laser of claim 1 or 2, characterized in that both mirrors are highly reflective for the fundamental wave of the laser, one mirror (3) is designed to be permeable for the pumped light as the input mirror, and the other mirror is permeable for the mixed frequency as the output mirror.

4.  The laser of any of claims 1 to 3, characterized in that the pumped light source (7) is designed as a laser diode (8).

5.  The laser of any of claims 1 to 3, characterized in that the pumped light source has a first laser diode (8) with fixed frequency and a second laser diode (9) with variable frequency, and the light of both laser diodes (8, 9) is coupled into the crystal (5).

6.  The laser of claim 5, characterized in that the light of both laser diodes (8, 9) is coupled into the crystal via a polarization coupler (10) and an input mirror (3).

7.  The laser of claims 1 to 2, characterized in that both mirrors are highly reflective for the fundamental wavelength of the laser and highly reflective for the pumped light, the output mirror being permeable for the mixed frequency.

## Revendications

1.  Un laser avec un résonateur (2) comprenant, entre deux miroirs (3, 4) un seul cristal (5), et avec une source de lumière de pompage (7) présentant les caractéristiques suivantes:
    - le cristal (5) est un cristal non linéaire biréfringent, par exemple $YAL_3(BO_3)_4$, ou $LiNbO_3$, qui contient, en tant que milieu actif à effet laser, par exemple Nd, Er, Ho, Tm;
    - la lumière de pompage et le milieu actif à effet laser contenu dans le cristal (5) ainsi que la longueur du cristal (5) sont mis en accord l'un avec l'autre de telle façon que la lumière de pompage soit presque, mais pas complètement, absorbée; et
- des moyens (6) d'adaptation de phase pour le battement de fréquence de l'onde fondamentale du laser et de la lumière de pompage au niveau du cristal sont prévus.

2. Laser selon la revendication 1, caractérisé en ce que les moyens d'adaptation de phase comprennent:
   - un dispositif de changement de la position du cristal (5); et/ou
   - un dispositif (6) de variation de température du cristal (5).

3. Laser selon la revendication 1 ou 2, caractérisé en ce que les deux miroirs sont fortement réfléchissant pour l'onde fondamentale du laser, l'un des miroirs (3) étant transmetteur pour constituer le miroir de couplage d'entrée pour la lumière de pompage, l'autre miroir étant transmetteur pour la fréquence de battement pour constituer le miroir de couplage de sortie.

4. Laser selon l'une des revendications 1 à 3, caractérisé en ce que la source de lumière de pompage (7) est une diode laser (8).

5. Laser selon l'une des revendication 1 à 3, caractérisé en ce que la source de lumière de pompage présente une première diode laser (8) à fréquence stable et une deuxième diode laser (9) à fréquence variable, et en ce que la lumière des deux diodes laser (8, 9) est couplée dans le cristal (5).

6. Laser selon la revendication 5, caractérisé en ce que la lumière des deux diodes laser (8, 9) est couplée dans le cristal au moyen d'un organe de couplage par polarisation (10) et un miroir de couplage d'entrée (3).

7. Laser selon la revendication 1 ou 2, caractérisé en ce que les deux miroirs sont fortement réfléchissants pour la longueur d'onde fondamentale du laser et sont fortement réfléchissants pour la lumière de pompage, le miroir de couplage de sortie présentant un pouvoir de transmission pour la fréquence de battement.